Europäisches Patentamt

European Patent Office

Office européen des brevets

(11) Publication number: 0 495 291 A1

# EUROPEAN PATENT APPLICATION

(21) Application number: 91308304.4

(22) Date of filing: 11.09.91

(51) Int. Cl.⁵: G01C 19/58, G01P 3/46

(30) Priority: 16.01.91 JP 44548/91

(43) Date of publication of application:
22.07.92 Bulletin 92/30

(84) Designated Contracting States:
CH DE FR GB IT LI

(71) Applicant: TAMAGAWA SEIKI KABUSHIKI
KAISHA
19-9 Shin Kamata 3-Chome
Ota-ku Tokyo(JP)

(72) Inventor: Kumagai, Hideo, c/o Tamagawa
Seiki K.K.
Iida Kojo, 1879, Ooyasumi
Iida-shi, Nagano-ken(JP)
Inventor: Shiozawa, Tatsuo, c/o Tamagawa
Seiki K.K.
Iida Kojo, 1879, Ooyasumi
Iida-shi, Nagano-ken(JP)

(74) Representative: White, Martin David et al
MARKS & CLERK 57/60 Lincoln's Inn Fields
London WC2A 3LS(GB)

(54) Semiconductor gyro apparatus.

(57) The present invention is concerned with a gyro apparatus making use of a semiconductor wherein the Coriolis force acting on the electron flow within the solid-state semiconductor device (31) is detected as a differential current for detecting the angular velocity. At least one current supply section (32) and at least two current detection sections (33, 34) spaced apart from the current supply section and from each other are provided in the semiconductor device for detecting the deviation of the current produced on application of an angular velocity as a differential current.

FIG.4

## BACKGROUNDS OF THE INVENTION

### Field of the Invention

This invention relates to a semiconductor gyro apparatus. More particularly, it relates to a semiconductor gyro apparatus for detecting the accelaration by sensing the Coriolis force acting on the stream of electrons flowing through a solid-state semiconductor device in the form of a differential current.

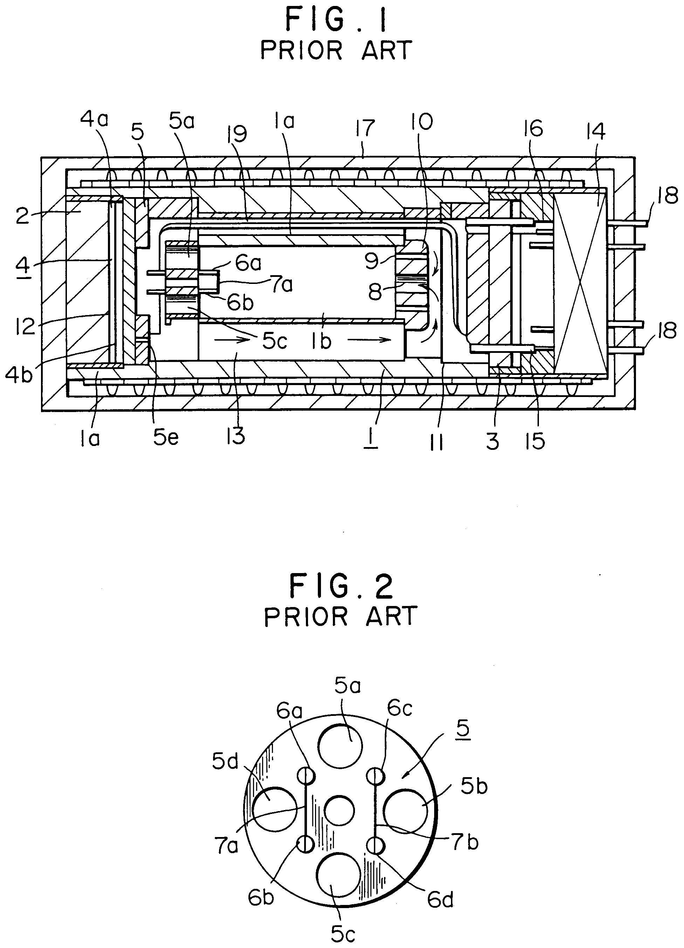

Figs. 1 to 3 show a gas rate sensor, which is a conventional angular velocity detection means, such as disclosed in JP Patent Kokai (Laid-Open) Publication No. 1-167671 (1989).

In these figures, 1 denotes a substantially cylindrical casing having both ends open. The open ends of the casing 1 are closed by a pump holder 2 and a relay terminal plate 3 so that the interior of the casing 1 is isolated from outside.

A vibration plate 4a, formed by a disc of electro-vibration type ceramic material, is provided on the pump holder 2 and has its rim secured integrally to the pump holder 2 to constitute an electrostrictive vibration pump 4 (gas pump).

Within the interior of the casing 1, an electrode holder 5 is provided at a predetermined distance from the vibrating plate 4a. This electrode holder 5 is constructed as shown in Fig. 2.

Thus the electrode holder 5 is provided with four gas guide through-holes 5a to 5d and four electrodes 6a to 6d which are arranged symmetrically with respect to its central axis. Hot wires 7a and 7b are connected across the electrodes 6a and 6b and across the electrodes 6c and 6d, respectively, by welding.

In the vicinity of the relay terminal plate 3 a nozzle plate 10 having a nozzle through-hole 8 and an auxiliary through-hole 9 is provided within casing 1, and a dust plate 11 is provided at a mid position between the relay terminal plate 3 and the nozzle plate 10.

A pump chamber 12 is defined between the pump holder 2 and the vibrating plate 4a of the electrostrictive vibrating pump 4 (gas pump) and the gas discharged by the pump 4 is transmitted to a gas channel 13 by way of the gas guide through-holes 5a and 5b.

An IC signal processing circuit section 14 is provided externally of the relay terminal plate 3 of the casing 1. The IC circuit section 14 is adapted to receive the driving power from outside, and is connected to a relay terminal 15 of the relay terminal plate 3 adapted for taking out an output signal of the hot wires 7a and 7b.

The relay terminal plate 3 is provided with a lead pin 16 which is connected to an external terminal 18 of an external casing 17.

At the external terminal 18, the power required for actuating the electrostrictive vibration pump 4 and the power required for heating the hot wires 7a and 7b are supplied by means of the signal processing circuit section 14, lead pin 16 and a plurality of lead wires 19 provided axially within the casing 1.

At the external terminal 18, output signals of the hot wires 7a and 7b are outputted by way of the signal processing circuit section 14.

The above described gas rate sensor operates in the following manner.

When the current is supplied to the electrostrictive vibration pump, the vibrating plate 4a is vibrated to compress the gas within the gas chamber 12. The compressed gas is led to channel 13 by means of a discharge opening 4b of the vibrating plate 4a and a discharge through-hole 5e of the electrode holder 5 and hence into a space defined between the nozzle plate 10 and the dust plate 11 so as to be injected by means of the nozzle through-hole 8, auxiliary through-hole 9 and an interior space 1b within the hollow cylindrical section 1a of the casing 1 towards the electrodes 6a to 6d.

After having uniformly cooled the hot wires 7a and 7b, welded to the electrodes 6a to 6d, the compressed gas is discharged through the gas guide through-holes 5a to 5d towards the vibrating plate 4a. The discharged gas is again led to the nozzle plate 10, by means of the channel 13, under the action of the electrostrictive vibration pump 4 (gas pump) so as to be circulated within the casing 1 in the direction marked with arrows.

If no acceleration is applied to the casing 1, the hot wires 7a and 7b are cooled uniformly. However, when an acceleration is applied to the casing 1 from outside, the gas stream is deviated within the casing 1 so that a non-equilibrated state is produced between the hot wires 7a and 7b and hence a minor voltage difference is generated between the hot wires 7a and 7b. This differential voltage may be measured to detect the acceleration applied to the casing 1.

The above described gas rate sensor suffers from the following disadvantages.

Since temperature sensitive elements in the form of a pair of heated hot wires are used as detection means for detecting the angular velocity, it takes a rather long time since the current is initially applied until stable output signals are produced from the hot wires, such that the apparatus cannot be used immediately after the current is supplied thereto.

Furthermore, the apparatus is bulky and complicated in structure such that it cannot be reduced in size without increasing production costs.

In addition, since the gas is circulated within the casing by a gas pump, the operation ceases in case of the malfunction of the gas pump.

OBJECT AND SUMMARY OF THE INVENTION

In view of the above described status of the art, it is a principal object of the present invention to provide a gyro apparatus making use of a semiconductor, wherein the Coriolis force acting on the electron flow within the interior of the solid-state semiconductor device is detected as the differential current for detecting the angular velocity.

According to the present invention, there is provided a gyro apparatus making use of a semiconductor, comprising a solid-state semiconductor device, at least one current supply section provided in the semiconductor device, and at least two current detection units spaced apart from said current supply section and from each other, wherein, when the semiconductor device experiences an angular velocity $\omega$, the deviation of electrons flowing in said semiconductor device is detected by the difference in the currents from said current detection units.

In a preferred embodiment of the present invention, the semiconductor device has a predetermined length, and the current supply section on one hand and the current detection units on the other are separated from each other along said length.

In a further preferred embodiment, the semiconductor is GaAs or InSb.

With a semiconductor gyro apparatus according to the present invention, since a current supply section and a pair of current detection units are provided at the ends of a semiconductor device having a predetermined length, the Coriolis force acts on the electrons flowing in the semiconductor device to produce current deviation when an angular velocity is applied from outside to the apparatus.

With an angular velocity $\omega$, an electron velocity v and the length $\ell$ of the semiconductor device, the time interval $\tau$ during which the electrons flow through the length $\ell$ is given by $\tau = \ell/v$.

During the time interval $\tau$, the flow of electrons is deviated by an angle $\theta \coloneqq \tau \cdot \omega = \omega\ell/v$. and the input angular velocity $\omega$ may be detected by the current flowing in the current detection units.

With a semiconductor type gyro apparatus of the present invention, since an angular velocity is detected on the basis of a current deviation in the semiconductor, the apparatus may be reduced in size as compared to the conventional mechanical or gas type gyro apparatus, while it may be produced easily at lower production costs. In addition, by lowering the mobility of the semiconductor, the angular velocity may be detected accurately, while magnetic effects may be reduced significantly.

BRIEF DESCRIPTION OF THE DRAWINGS

Fig. 1 is a cross-sectional view showing a conventional gas rate sensor.

Fig. 2 is a plan view showing essential portions of Fig. 2.

Fig. 3 is a block diagram showing essential portions of Fig. 2.

Fig. 4 is a block diagram showing a semiconductor gyro apparatus according to the present invention.

Detailed Description of Preferred Embodiment

By referring to the drawings, an illustrative embodiment of a semiconductor gyro apparatus according to the present invention is explained in detail.

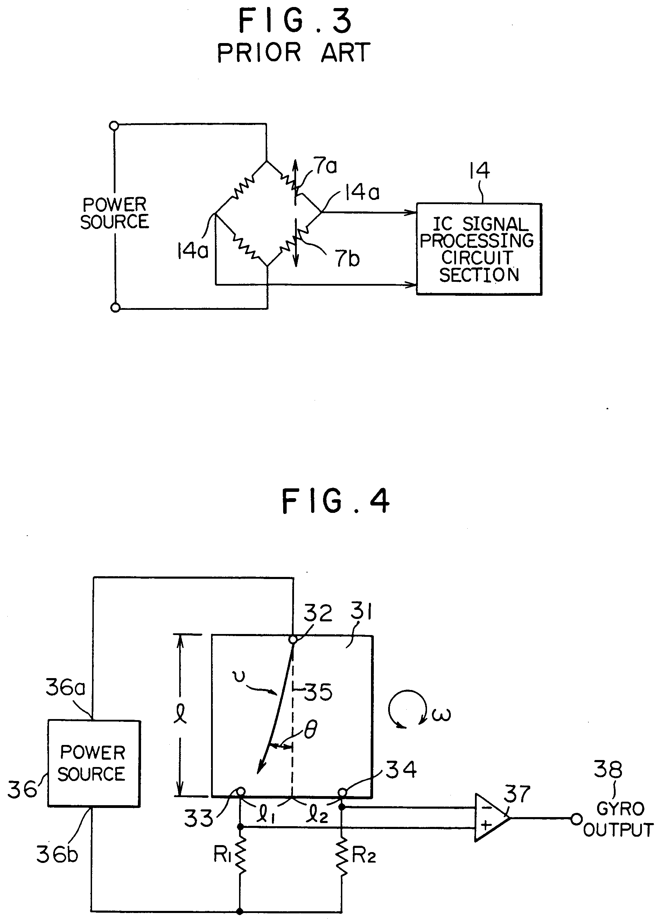

Referring to Fig. 4, showing a semiconductor gyro apparatus according to the present invention in a schematic connection diagram, 31 denotes a semiconductor device, formed of GaAs or InSb, as an example, and having a predetermined length $\ell$.

At least one current supply section 32 is provided at one end of the semiconductor device and at least a pair of current detection sections 33 and 34, spaced a predetermined distance apart in the transverse direction, are provided on another end of the semiconductor device 31.

The current detection sections 33 and 34 are provided at equal distances $\ell_1$ and $\ell_2$ from a central line 35 passing through the current supply section 32.

A first terminal 36a of a current source 36 is connected to the current supply section 32, while a second terminal 36b of the current source 36 is connected to the current detecting sections 33 and 34 by means of a first resistor $R_1$ and a second resistor $R_2$.

The current detecting sections 33 and 34 are connected to a comparator 37 from which a gyro output 38 is produced on the basis of the current deviation value.

The above described semiconductor gyro apparatus according to the present invention operates in the following manner.

If, in the state of Fig. 4, there is no applied angular velocity $\omega$, the well-known Coriolis force, that is, a velocity-dependent pseudo-force in a coordinate system rotating with respect to an inertial system and equal and opposite to the product of the mass of the particle on which the force acts and its Coriolis acceleration, does not act, so that the electron current is not deviated but is situated at the same position as the center line 35. Thus the current values obtained at the current sensors 33 and 34 are equal and hence the gyro output 38 is zero.

Conversely, if there is an angular velocity ω, the current is deviated, as shown by a solid line in Fig. 4, and a differential current is generated between the current sensors 33 and 34. The current deviation is outputted as the gyro output 38.

That is, if the input angular velocity is ω, the electron velocity v and the length of the semiconductor device 31 is ℓ, the time interval τ during which the electrons flow through the length ℓ is given by

$$\tau = \ell/v$$

During this time interval τ, the current is deviated by an angle $\phi = \tau \cdot \omega = \omega \cdot \ell/v$ by the input angular velocity ω. The gyro output 38 corresponding to this current deviation may be obtained by comparing the currents flowing through the current sensors 33 and 34 by comparator 37.

On the other hand, the semiconductor device 31 has a proper electron mobility μ and, by lowering this mobility, it becomes possible to increase the detection accuracy of the angular velocity ω and to diminish magnetic effects.

In general, the electron mobility μ represents the carrier drift velocity on application of a unit electrical field and the larger the value of μ, the quicker is the carrier movement, such that the electron mobility μ is a decisive factor in determining the high frequency limit in a variety of semiconductor devices, such as transistors. Thus it is generally of utmost importance in developing semiconductor devices to increase the value of the electron mobility μ.

This electron mobility μ is markedly influenced by the temperature, crystalline defects or impurities. Thus it is changed by scattering effects by impurities at lower temperatures and by lattice oscillations at higher temperatures.

Meanwhile, the electron mobility μ is $10^3$ cm$^2$/Vs for GaAs and $10^4$ for InSb, such that these known semiconductors are not suitable in detecting the angular velocity ω.

For example, if the deviation angle of electrons to be detected at the time of application of an angular velocity is $\theta\omega$, the deviation angle of electrons to be detected at the time of application of magnetic field B is $\theta_B$, a high electron mobility is μH and the low electron mobility is μL, where μH is more than several 1000 cm$^2$/Vs and μL is less than several 100 cm$^2$/Vs, the deviation angle $\theta\omega$ is given by $\theta\omega \propto \omega/\mu$ and the deviation angle $\theta_B$ is given by $\theta_B \propto B \cdot \mu$. Therefore, if μH $= 10^2$ μL, then $\theta\omega L = 10^2 \theta\omega H$ and $\theta_B L = 10^{-2} \theta_B H$. That is, if the electron mobility is reduced by a factor of $10^2$ the angle of deviation of electrons due to an applied angular velocity, $\theta\omega$, is increased by $10^2$, while the angle of deviation due to a magnetic field, $\theta_B$, is reduced by a factor of $10^2$. This improves the characteristics of the apparatus.

The characteristics, for example the mobility, of the semiconductor 31 may be modified by changing the amount of implantation of impurities.

**Claims**

1. A gyro apparatus making use of a semiconductor comprising
   a solid-state semiconductor device (31),
   at least one current supply section (32) provided in the semiconductor device (31), and
   at least two current detection units (33, 34) spaced apart from said current supply section (32) and from each other,
   wherein, when the semiconductor device (31) experiences an angular velocity ω, the deviation of electrons flowing in said semiconductor device (31) is detected by the difference in the currents from said current detection units (33) and (34).

2. A gyro apparatus making use of a semiconductor according to claim 1, wherein said semiconductor device (31) has a length ℓ and wherein said current supply section (32) and the current detection units (33) and (34) are spaced apart from each other along said length ℓ.

3. A gyro apparatus making use of a semiconductor according to claim 1 or where the semiconductor device (31) is GaAs or InSb.

# FIG. 1
## PRIOR ART

# FIG. 2
## PRIOR ART

# FIG.3
## PRIOR ART

POWER SOURCE

7a

14a

14a

7b

IC SIGNAL PROCESSING CIRCUIT SECTION

14

# FIG.4

32  31

36a

$\upsilon$

35

$\theta$

$\omega$

POWER SOURCE

36

34

37

38

GYRO OUTPUT

36b

33

$\ell$

$\ell_1$  $\ell_2$

$R_1$

$R_2$

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 341 801 (MESSERSCHMITT-BÖLKOW-BLOHM) * claims; figures 1,2 * | 1-3 | G01C19/58 G01P3/46 |

-----

|  |  |  | TECHNICAL FIELDS SEARCHED (Int. Cl.5) |
|---|---|---|---|
|  |  |  | G01C G01P |

The present search report has been drawn up for all claims

| Place of search | Date of completion of the search | Examiner |
|---|---|---|
| THE HAGUE | 28 JANUARY 1992 | HOEKSTRA F.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)